# EUROPEAN PATENT SPECIFICATION

(11) **EP 4 363 165 B1**
(45) Date of publication and mention of the grant of the patent: **30.04.2025**
(21) Application number: 22731321.0
(22) Date of filing: 27.05.2022
(51) Int. Cl.: A01G 9/12, B25B 7/02, A01G 17/06, B25B 27/14, B25B 7/08

(54) **PRACTICAL TOOL FOR FASTENING A REVERSIBLE WIRE BLOCKING ELEMENT ON A SUPPORT ROD FOR PLANTS**
PRAKTISCHES WERKZEUG ZUR BEFESTIGUNG EINES REVERSIBLEN DRAHTBLOCKIERUNGSELEMENTS AUF EINER STÜTZSTANGE FÜR PFLANZEN
OUTIL PRATIQUE POUR FIXER UN ÉLÉMENT DE BLOCAGE RÉVERSIBLE DE FIL SUR UN TUTEUR POUR PLANTES

(30) Priority: 29.06.2021 IT 202100016994
(43) Date of publication of application: 08.05.2024
(73) Proprietor: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Giugni, Diego
(86) International application number: PCT/IB2022/055001
(87) International publication number: WO 2023/275636

(56) References cited:
- EP-A1- 1 954 118
- WO-A1-2014/009783
- US-A- 2 455 557

## Description

### TECHNICAL FIELD OF INVENTION

The present invention refers to a practical tool for mounting a reversible blocking element for a metal or plastic wire on a plant support rod. The invention also refers to a method for reversibly blocking a carrying wire on a support rod for plants comprising the use of said tool and, more generally, a method for building a support system for plants comprising the use of said tool.

### PRIOR ART

The building of systems for supporting fruiting plants arranged in rows is a well-known practice in the farming field. Such systems are generally made up of a vertical grid consisting of a plurality of rods driven vertically into the ground and connected to each other by means of movable and/or fixed wires stretched horizontally. Said rods differ conventionally in head poles on which said wires are tied, in a movable or fixed manner, and intermediate poles arranged in rows between said head poles to guide the wires. This grid has the fundamental function of supporting the branches, vine-shoots or fruiting shoots of the plants for the purpose of sustaining then during their growth and allowing the best exposure to the sun of both leaves and fruit, to as to achieve the best possible growing conditions.

The grid supporting structure is completed, particularly in the case of grapevines, with rods for supporting the portion of the wooden shaft of the plant, which is the portion that does not bear leafing branches. The rods are substantially rigid elongate elements that are driven into the ground next to the plant and that can have a cylindrical, oval, quadrangular, triangular, or T-shaped cross section, all of them substantially regular in the case of rods made of metallic, plastic or other preformed material. Alternatively, in the case of wooden support rods, the cross sections can be similar to the ones specified above, but irregular.

One or more metal or plastic wires are then extended horizontally between said rods and reversibly associated to the same, so as to allow the fruiting shoot to be tied along said wires and supported during the growth of the branches that that will bear the leaves and fruits.

A tool according to the preamble of claim 1 is known from document US 2 455 557 A.

Various methods are generally used to stably and firmly connect the vertical rods with the fixed horizontally extending wires.

A first one of said methods requires the use of common portions of metal wire that are wound around the regions where each horizontal wire crosses each vertical rod, so that each wire portion is then tightened and attached by means of tongs, grippers or pincers so as to hold the horizontal wire and the vertical rod firmly joined to each other.

Another method provides for the use of vertical blocking elements consisting of vertical clips provided with a saddle portion adapted to lean on a rounded arc of a rod, connected to two folds, each adapted to receive a portion of a horizontal wire symmetrically with respect to the rod and on its opposite side with respect to the engagement of the saddle portion. Two rectilinear arms run parallel to each other with respect to the rod and end with two rounded ends adapted to engage the rod from the side of the saddle portion. This element is, for example, described in the patent EP1954118.

This element solves most of the above drawbacks and enables a strong tightening of the wire on the rod. It should be noted that its installation requires a certain attention since each of the two branches and the relative rounded ends must be handled individually and correctly. This obviously implies a certain demand of time and fine manual ability that the operator must acquire with practice. Moreover, after a few pieces, the installation by hand becomes practically impossible due to the efforts and pressure to which the fingers are subjected. Or else, the use of an accessory such as a screwdriver or a curved grapple, on one hand does not completely eliminate the use of the fingers, and on the other, if it is not properly handled risks straining the two arms and nullifying their hold on the rod. In other words, if the deformation of the two arms is not properly calibrated, both the installation using accessories or performed manually can cause an insufficient tightness of the clip.

### SUMMARY OF THE INVENTION

The technical problem underlying the present invention is therefore to devise a practical tool that avoids the straining of the clip and at the same time allows a fast and easy installation without demanding strenuous maneuvers on the part of the operator.

This problem is solved with a tool for the installation of an elastic and reversible blocking element for horizontal metal or plastic wires on vertical rods that allows the fast and safe installation of the element even by non-specialized personnel.

Thus, a first objective of the present invention is a particularly handy tool for mounting an elastic and reversible blocking element for horizontal metal wires on vertical rods.

A second objective is a tools that does not fatigue the operator.

A third objective is a tool calibrated in such a way as not to cause excessive and harmful stresses to the blocking element.

A further objective is a tool that is particularly simple to manufacture.

A still further objective is a method for building a support grid for fruiting plants comprising the fixing of a horizontal wire on a vertical rod through the application of a blocking element installed with said tool.

### BRIEF DESCRIPTION OF THE FIGURES

Further characteristics and the advantages of the tool for the installation of a cross-locking of the horizontal wires on the vertical rods for supporting a row of plants according to the invention will become more evident from the following description of an embodiment given purely by way of a non-restrictive example with reference to the following figures, wherein:
- figure 1 is a side view of a tool for the installation of a wire blocking element on a plant support rod, in accordance with the present invention;
- figure 2 is an axonometric view of the tool of figure 1 ;
- figure 3 is a front view of the tool of figure 1;
- figure 4 is an axonometric view of a first step in the installation of the blocking element of a horizontal wire on a plant support rod by means of the tool of figure 1;
- figure 5 is an axonometric view of a second step in the installation of the blocking element;
- figure 6 is an axonometric view of a third step in the installation of the blocking element;
- figure 7 is an axonometric view of a fourth step in the installation of the blocking element;
- figure 8 is an axonometric view of a fifth step in the installation of the blocking element;
- figure 9 is an axonometric view of a step of releasing the tool of figure 1 after the installation of the blocking element.

### DETAILED DESCRIPTION OF THE INVENTION

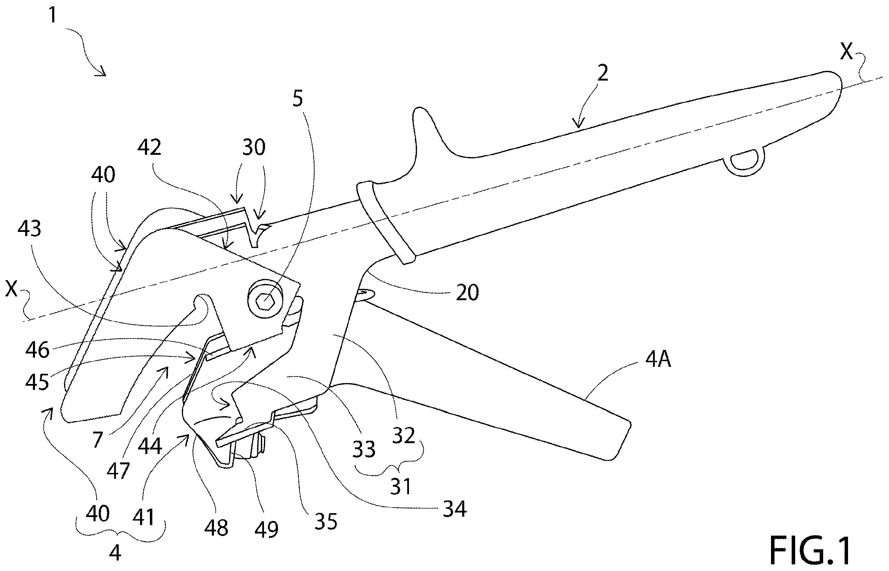

With reference to figures 1-3, reference numeral 1 indicates a tool for reversibly blocking a wire on a rod for plants. The tool 1 comprises a command handle extending along a rectilinear axis X-X, a first portion 3 being one piece with said handle and a second portion 4 hinged onto said first portion by means of a rotating pin 5.

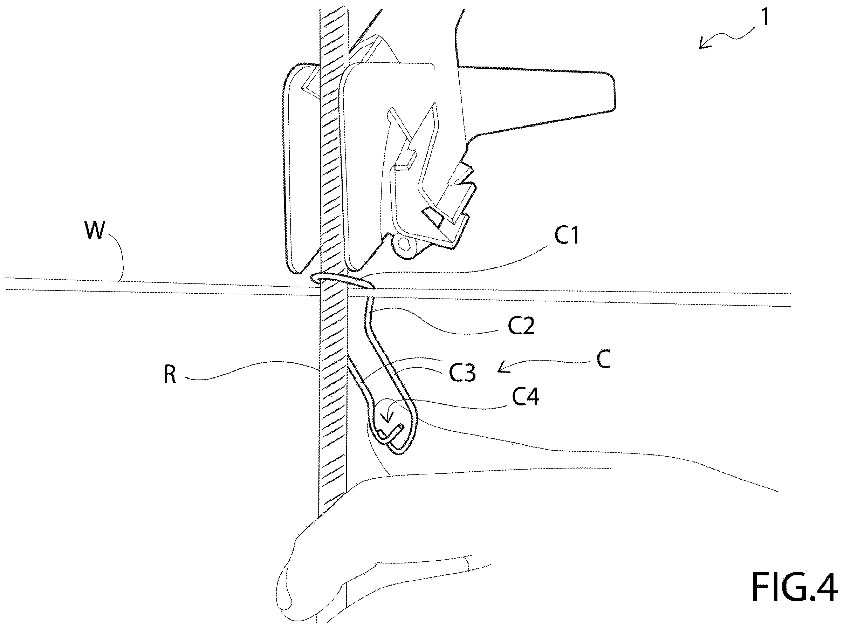

In particular, the first portion 3 is in one piece with a first end 20 of the handle 2 and comprises a fork 31 for pushing a blocking element C of a wire W on a support rod R for plants (figures 4-9) and, preferably, a centring fork 30 onto said rod R. The centring fork 30 extends substantially along the same axis X-X of the fork, while the pushing fork 31 extends away from said axis X-X. Both said forks delimit a space 6 for receiving the rod R with the blocking element C fitted on it to be activated in the operative position. In other words, the two branches of each fork are equally spaced from each other.

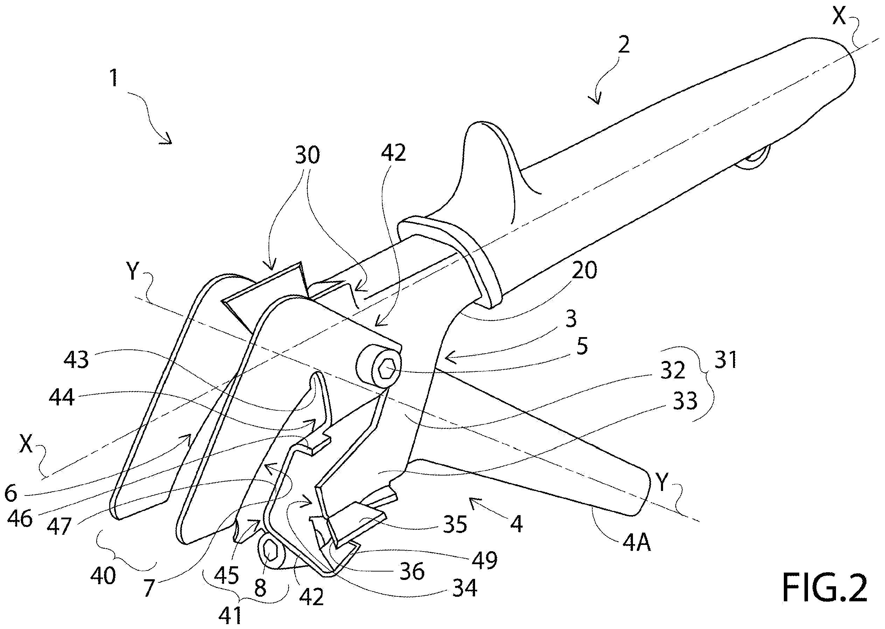

Advantageously, each branch of the pushing fork 31 comprises a first portion 32 extending inclined with respect to the axis X-X of the handle 2 and in opposite direction with respect to its first end 20, and a second portion 33 that is instead substantially parallel to said axis and turned in the opposite direction with respect to the handle. The second portion 33 has the free end provided with a protrusion 35 bent in an opposite direction with respect to the space 6 defined by the engaging fork 31 to form an edge 36 (figure 2) pushing the blocking element C, as described later with reference to the fastening of the element on the rod R for locking the horizontal wire W.

The second portion 4 of the tool also includes two forks: a first fork 40 for centring the rod R and for engaging with the horizontal wire W to lock the rod R and a second fork 41 for engaging with the blocking element C. In particular, each branch of the second engaging fork 41 with the blocking element is one piece with a corresponding branch of the first fork 40 for engaging with the wire by means of a bridged portion 42. The bridged portion is then rotatably fixed to the first portion 3 of the tool through said pin 5 so that the first fork 40 is generally external to the first portion 3 and the second fork 41 is internal to the fork 31 of the first portion 3. Preferably, the bridged portion is rotatably fixed to the centring fork 30 so that the first fork 40 is external to said centring fork.

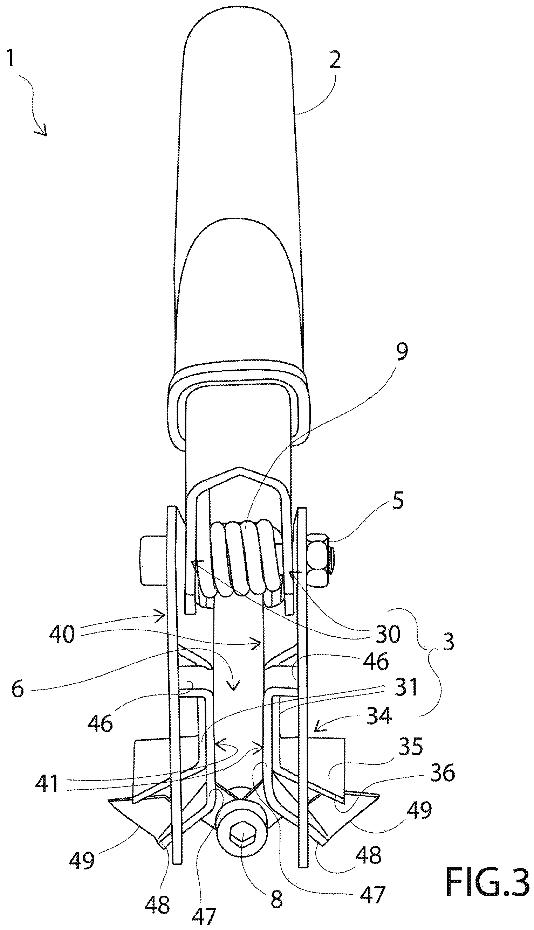

In particular, the first fork 40 has respective branches extending generally rectilinear and inclined with respect to said axis X-X of the handle to extend the space 6 for receiving the rod R and the blocking element C. Each of said branches is connected with the bridged portion 42 defining a notch 43 to receive the wire W. The respective branches of the second fork 41 extend instead generally parallel to said axis X-X and internally with respect to the corresponding branches of the fork 31 pushing the blocking element C of the first portion 3 of the tool. Thus, the bridged portion 42 is connected with each branch of the second fork 41 by means of a bend 44 that brings the same second fork to a more internal plane with respect to the fork 31 engaging with the blocking element 3 of the first portion of the tool (figure 3).

From what has been described and shown above, particularly in figure 1, it is evident that between the first fork 40 and the second fork 41 is formed a space 7 that allows the tool to engage the wire W to insert it into the notch 43 described above, as explained in detail below.

In addition, each branch of the second fork 41 has an edge 45 defining a space 7 comprising in sequence a first portion 46 bent outwardly with respect to the space, a second portion 47 lying on the plane of said branch and is inclined away from said bridged portion 42, a third portion 48 bent again outwardly of the space, and preferably toward the handle 2, and a fourth portion 49 bent toward the rotating pin 5. In practice, the third 48 portion and the fourth 49 portion of the edge form a side wing protruding outwardly located at the protrusion 35 of the second portion 33 of each branch of the fork 31 of the first portion 3 of the tool, and below said protrusion when the forks of each portion are turned toward the ground. Moreover, in the space between said wings is fixed a stop element 8 for abutting against the rod R, as will be explained below.

The second portion 4 of the tool can comprise an extension 4A being one piece with the first 40 and second 41 forks that is rectilinear and forms and acute angle with the handle 2. This extension has the function of helping to maintain the vertical position of the tool in the movement made toward the rod. In fact, with the palm of the hand pressing against the handle 2 and with the four fingers of the hand open and resting on the extension 4A it is possible to give more stability to the operation of inserting the blocking element.

An elastic element 9 (figure 3) is mounted on the pin 5 between the two branches of the centring fork 30 of the first portion 3 for the return to the rest position of the two portions 3 and 4, as explained below.

With reference to figures 4-9, will now be described the operation of the tool 1.

Firstly, the clip or blocking element C, as described for example in the Patent EP1954118, is fitted onto the rod R in a completely conventional manner, that is, with its saddle portion C1 surrounding the rod and the two rounded ends C2 of the ends of the saddle (only one is shown in figure 4) resting on the wire W arranged horizontally crosswise on one side of the rod. In this position, the two arms C3 of the clip are turned on the opposite side of the rod with respect to the one of the saddle portion and with the respective rounded ends C4 crossing and overlying each other.

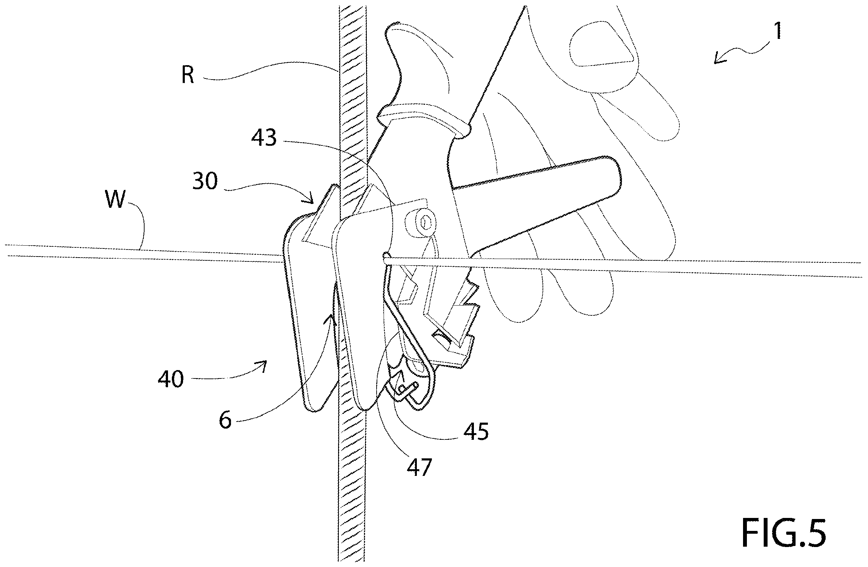

The tool 1 is now moved near the rod from the protruding side of the arms C3 (figure 4) so that the space 6 of the centring fork 30 of the first portion 3, and consequently also of the first fork 40 of the second portion 4, receives the rod above the blocking element C. With said automatic centring on the rod, it is sufficient to lower the tool so as to set the notch 43 of the first fork 40 on the wire W (figure 5). At the same time, the blocking element C is received in said space 6.

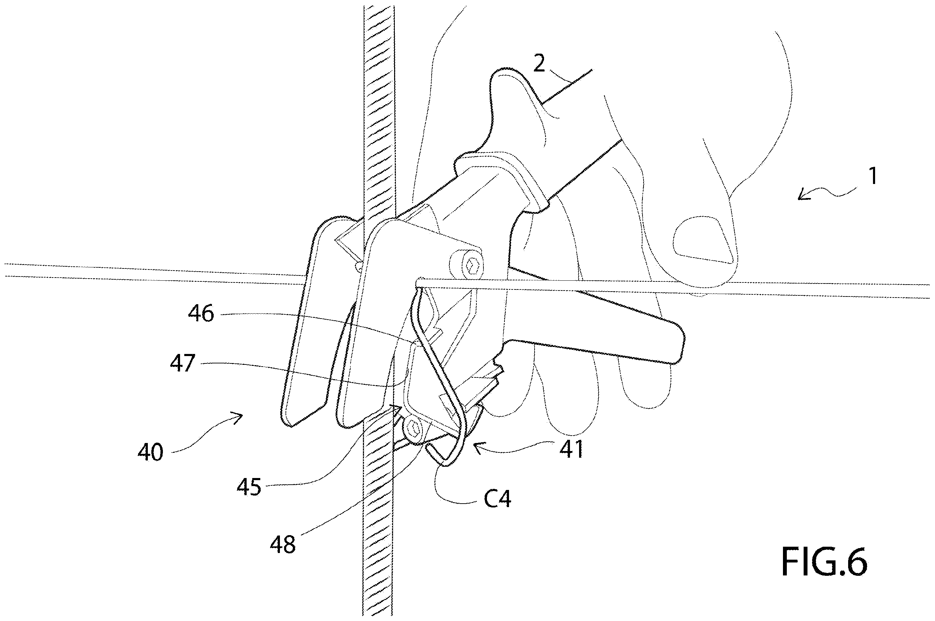

Following a first downward rotation of the tool with respect to said wire W, the second portion 47 of the edge 45 of each second fork 41 is inserted between the two arms C3 of the blocking element C (figure 5). Continuing the rotation, said arms abut first against the first portion 46 of the edge and then they are pushed to spread apart from said third portion 48 that extends away from the rod (figure 6). It should be noted that near the two rounded ends C2 of the blocking element C, the first portion 46 of the edge 45 provides a further stop point to avoid yield stresses along said arms.

In other words, the first portion 46 of the edge 45 favors the initial contact with the arms C3 and facilitates the movement of the same arms toward the rod R, while the third portion 48 straddles them (figure 6). It should be noted that the fourth portion 49 of the edge 45 is a safety bend that avoids the accidental disengagement of the arms C3 to the extent they are pushed to spread apart as they could move past the third portion 48 and close back behind it.

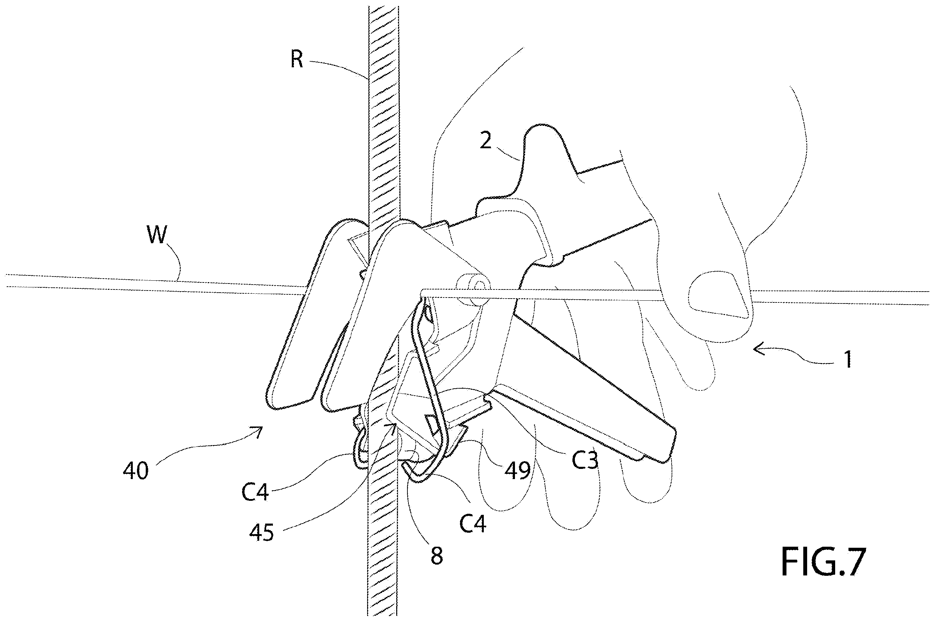

Continuing to push the tool in a rotation movement, the second fork 41 of the second portion 4 receives in its space the rod R until the stop element 8 abuts against the rod itself and, at the same time, the first fork 40 moves past the rod (figure 7). In this movement, the two rounded ends C4 of the blocking element C are also spread apart and separated but not sufficiently to straddle the rod R and lean against it. The second portion 4 therefore cannot continue to rotate on the wire W and, therefore, the stop 8 element becomes a sort of travel limit.

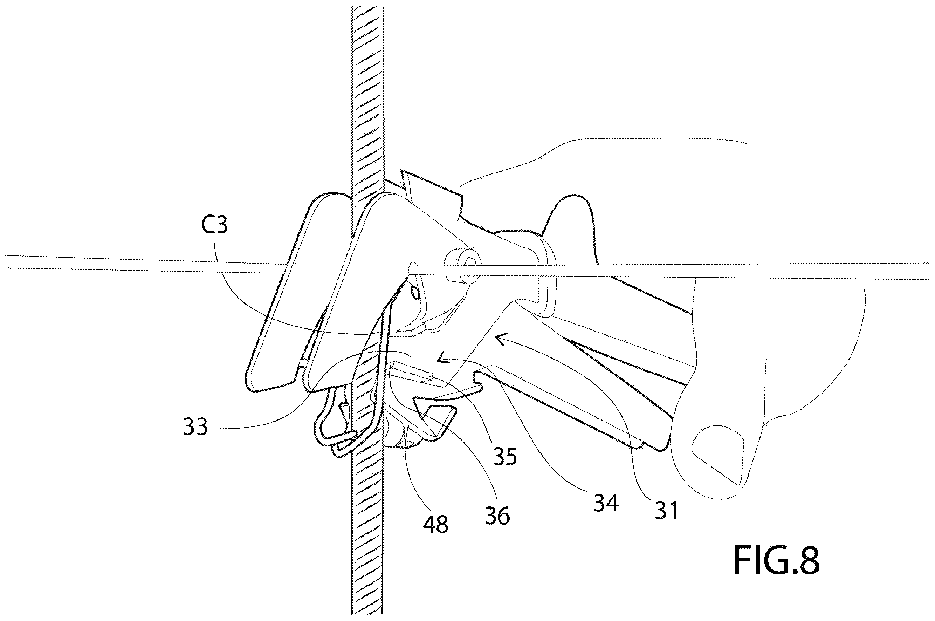

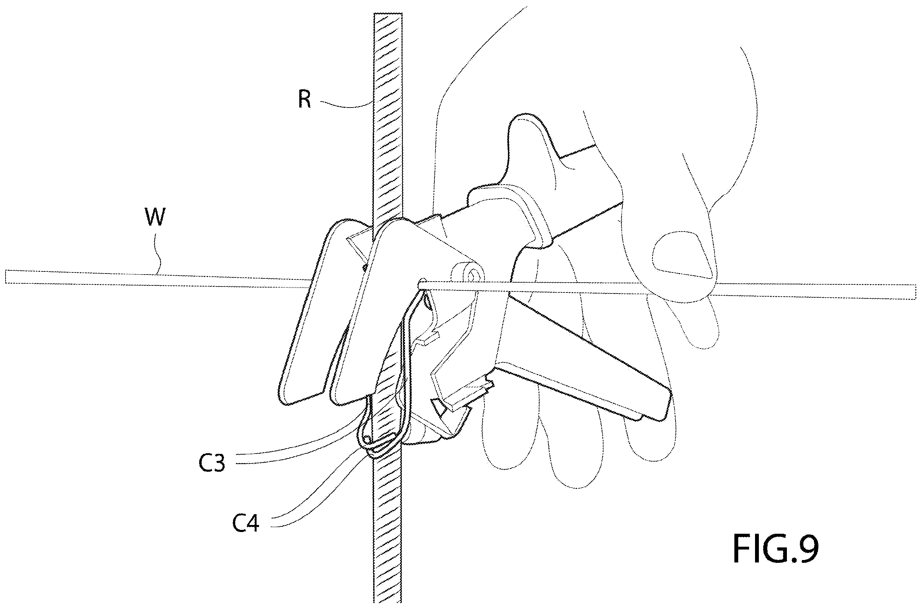

Thus, continuing the push on the handgrip 2, the first portion 3 rotates on the pin 5, overcoming the spring force of the elastic element 9 and, consequently, the centring fork 30 for engaging with the rod leaves the engagement with the latter (figure 7), while the fork 31 for engagement with the blocking element C rotates toward the rod so that the edge 36 pushing the protrusion 35 of the free end 34 of the second portion 33 of each branch of the fork goes into abutment with the arms C3 of the blocking element C, pushing them to go past the rod R from the same side of the saddle portion C1. At the same time, the two rounded ends C4 are first forced against the rod from the opposite side with respect to the saddle portion C1, undergoing an elastic torsion that causes the arms C3 to spread apart further. Once these ends have moved past the maximum diameter of the rod, the blockage that maintains the ends C4 spread apart is exceeded, and so are also the arms C3, which are free to return elastically to approach each other, favored also by the inclination of the fourth portion 48 (figure 8). The ends C4 can thus cross each other on the rod from the same side of the saddle portion C1, while the arms approach each other again in a position parallel to the side of the rod R (figure 9).

The tool can now be removed from its resting position on the wire W by simply lifting it because it is completely free from the engagement with the blocking element C.

It is evident from the above description that the tool allows, in an automatic, simple and fast manner the correct and accurate installation of the blocking element without requiring manual operations or the use of devices that however require a certain manual skill and contact with the blocking element on the part of the operator. Moreover, it is constructively very simple, being essentially formed by two portions jointed with two shaped forks.

A further objective of the present invention is then a method for reversibly cross blocking a horizontal metal wire W on a rod of bar through the use of the tool of the present invention.

The method comprises the following steps:
- providing a blocking element C as previously described:
   - inserting its saddle portion C1 on the rod R driven vertically into the ground until the rounded ends C2 of said saddle portion engage the wire W extending horizontally in contact with the rod;
   - pushing the rounded ends C4 of said element C, forcing them to straddle the rod to pass from the side where the wire W rests on the rod to the opposite side by means of the tool described earlier.

In other words, the method requires the use of the tool according to the present invention to install a blocking element for a horizontal wire on a rod for plants driven vertically into the ground.

A further objective of the invention consists of a method for building a support grid for rows of plants comprising the steps of:
- driving vertically into the ground a plurality of rods R of a row of plants (not shown);
- stretching at least one metallic wire W horizontally along said plurality of rods;
- reversibly locking said at least one metal wire W on said plurality of rods R by means of a blocking element as previously described mounted using the above-mentioned tool.

Preferably, the method comprises additional steps of building the grid like the ones described in the introductory part of the present description, that is, for example driving into the ground head poles on which to fasten the ends of said metal wires, laying out a plurality of movable wires to support the growing vegetative part of the plant, applying elastic compensation devices for the movable wires, and other known steps.

From what has been described above, it can be seen that the drawbacks of the prior art connected with the methods of blocking the wires on the rods have been overcome and at the same time important advantages have been achieved.

In fact the tool makes it possible to avoid acting manually on the blocking element and thus subjecting the operator to fatiguing strains.

In addition, it is no longer necessary to resort to fine manual operations in the installation because the operations are practically automated.

The serious drawback of the danger of wearing out the blocking element is also prevented thanks to controlled and correctly calibrated operations.

The tool is constructively simple to make, with the great advantage of having few pieces that interact with movements subject to low wear-out. Therefore, the duration of the tool is guaranteed against wear, as is the facility and economy of production.

Many variants of the blocking elements according to the present invention can be achieved by a technician skilled in the field, without however departing from the scope of protection of the enclosed claims.

For example, the shapes of each component shown in the figures can vary according to particular requirements or preferences without affecting their functionalities as previously described.

The materials used are completely conventional in the tool-making field, that is, metallic materials such as steel and metallic alloys.

## Claims

1. Tool (1) for fastening an element (C) adapted to reversibly block a horizontal wire (W) onto a rod (R) for plants, said rod being vertically stuck into the ground, comprising a command handle (2) extending along a rectilinear axis (X-X), a first portion (3) being one piece with said handle and a second portion (4) hinged onto said first portion by means of a rotating pin (5), wherein said first portion (3) and said second portion (4) delimit a space (6) for receiving said rod (R) and said blocking element (C), said first portion (3) comprising a fork (31) for pushing arms (C3) of said blocking element (C) and said second portion (4) comprising a first fork (40) for centring the rod (R) and for engaging in rotation with said wire (W), said first fork being rotatable fixed outwardly to said first portion (3) **characterised in that** a second fork (41) for partially diverging said arms (C3), which second fork is rotatable fixed internally to said fork (31) for pushing of said first portion (3).

2. Tool (1) according to claim 1, wherein said fork (31) for pushing the blocking element (C) is one piece with a first end (20) of the handle (2) and extends far away from said axis (X-X) with a first portion (32) inclined with respect to the axis (X-X) and opposite to the first end (20), and a second portion (33) which instead is substantially parallel to said axis and opposite to the handle.

3. Tool (1) according to claim 2, wherein said second portion (33) has a free (34) end provided with a protrusion (35) bend opposite with respect to the space (6) to form an edge (36) for pushing the blocking element (C).

4. Tool (1) according to any one of claims 1 to 3, wherein each branch of said second fork (41) of the second portion (4) is one piece with a corresponding branch of the second fork (40) by means of a bridged portion (42), said bridged portion being rotatably fixed to a fork (30) for centring onto the rod (R) of the first portion (3) through said pin (5) so that the first fork (40) is positioned outside to the centring fork (30) of the first portion (3) and the second fork (41) is positioned inside the pushing fork (31) of said first portion.

5. Tool (1) according to claim 4, wherein the first fork (40) has respective branches extending rectilinear and inclined with respect to said axis (X-X) of the handle (2) to extend the space (6) for receiving the rod (R), each of said branch connects with the bridged portion (42) defining a notch (43) to receive in rotation the wire (W).

6. Tool (1) according to claim 4 to 5, wherein the branches of the second fork (41) extend generally parallel with respect to said axis (X-X) and internally with respect to the corresponding branches of the fork (31) of the first portion (3), and the bridged portion (42) is connected with each branch of the second fork (41) through a bend (44) which bend moves the second fork onto a plane internal with respect to said fork (31) of the first portion.

7. Tool (1) according to any one of claims 1 to 6, wherein each branch of the second fork (41) has an edge (45) defining a space (7) with the first fork (31) for receiving the wire (W), said edge comprising a first portion (46) bend outwardly with respect to the space, a second portion (47) laying on the plane of said branch and is inclined far away from the bridged portion (42), a third portion (48) bend again towards outside the space, and a four portion (49) bend toward the rotating pin (5).

8. Tool (1) according to any one of claims 1 to 7, wherein said second fork (41) of the second portion (4) comprises a stop element (8) as limit-movement of the rotation on the wire (W).

9. Method for mounting a blocking element (C) of a horizontal wire (W) onto a rod (R) for plants, comprising the steps of:
- providing a blocking element (C) comprising a saddle portion (C1), two rounded ends (C2) of said saddle portion, two longitudinal arms (C3) extending parallel from said rounded ends and two rounded ends (C4) of said arms crossing each other;
- putting said saddle portion (C1) onto the rod (R), which rod is vertically stick into the ground, till the rounded ends (C2) of said saddle portion engage the wire (W) horizontally stretched against the rod (R);
- pushing the arms (C3) and their rounded ends (C4) of said element to pass over the rod to move from the side where the wire is in contact with the same rod to the opposite said by means of the tool (1) according to any one of claims 1 to 8.

10. Method for building a grid for supporting plant rows, comprising the steps of:
- vertically sticking onto the ground a plurality of rods (R) of a plant row;
- stretching at least a wire (W) horizontally along said plurality of rods;
- reversibly blocking said at least one wire (W) onto said plurality of rods (R) by means of a blocking element (C) comprising a saddle portion (C1), two rounded ends (C2) of said saddle portion, two longitudinal arms (C3) extending parallel from said rounded ends and two rounded ends (C4) of said arms crossing each other, wherein the blocking element is mounted with a tool (1) according to any one of claims 1 to 8.

## Patentansprüche

1. Vorrichtung (1) zum Befestigen eines Elementes (C), das zum umkehrbaren Arretieren eines horizontalen Drahtes (W) an einer Stange (R) für Pflanzen eingerichtet ist, wobei die Stange vertikal in den Boden gesteckt wird, die Vorrichtung einen Betätigungsgriff (2), der sich entlang einer geradlinigen Achse (X-X) erstreckt, einen ersten Abschnitt (3), der aus einem Stück mit dem Griff besteht, sowie einen zweiten Abschnitt (4) umfasst, der an dem ersten Abschnitt mittels eines Drehbolzens (5) angelenkt ist, wobei der erste Abschnitt (3) und der zweite Abschnitt (4) einen Raum (6) zum Aufnehmen der Stange (R) und des Arretierelementes (C) begrenzen, der erste Abschnitt (3) eine Gabel (31) zum Drücken von Armen (C3) des Arretierelementes (C) umfasst und der zweite Abschnitt (4) eine erste Gabel (40) zum Zentrieren der Stange (R) sowie zum Herstellen von Dreheingriff mit dem Draht (W) umfasst, wobei die erste Gabel drehbar außen an dem ersten Abschnitt (3) befestigt ist, **dadurch gekennzeichnet, dass** eine zweite Gabel (41) zum teilweisen Aufweiten der Arme (C3) vorhanden ist, wobei die zweite Gabel zum Drücken des ersten Abschnitts (3) drehbar innen an der Gabel (31) befestigt ist.

2. Vorrichtung (1) nach Anspruch 1, wobei die Gabel (31) zum Drücken des Arretierelementes (C) aus einem Stück mit dem ersten Ende (20) des Griffs (2) besteht und sich weit entfernt von der Achse (X-X) erstreckt und dabei ein erster Abschnitt (32) in Bezug auf die Achse (X-X) und entgegengesetzt zu dem ersten Ende (20) geneigt ist, während ein zweiter Abschnitt (33) im Wesentlichen parallel zu der Achse ist und dem Griff gegenüberliegt.

3. Vorrichtung (1) nach Anspruch 2, wobei der zweite Abschnitt (33) ein freies Ende (34) aufweist, das mit einem Vorsprung (35) versehen ist, der entgegengesetzt zu dem Raum (6) gebogen ist und eine Kante (36) zum Drücken des Arretierelementes (C) bildet.

4. Vorrichtung (1) nach einem der Ansprüche 1 bis 3, wobei jeder Schenkel der zweiten Gabel (41) des zweiten Abschnitts (4) über einen Überbrückungsabschnitt (42) aus einem Stück mit einem entsprechenden Schenkel der zweiten Gabel (40) besteht, wobei der Überbrückungsabschnitt drehbar an einer Gabel (30) des ersten Abschnitts (3) zum Zentrieren auf der Stange (R) über den Bolzen (5) befestigt ist, sodass die erste Gabel (40) außerhalb der zentrierenden Gabel (30) des ersten Abschnitts (3) positioniert ist und die zweite Gabel (41) innerhalb der drückenden Gabel (31) des ersten Abschnitts positioniert ist.

5. Vorrichtung (1) nach Anspruch 4, wobei die erste Gabel (40) jeweilige Schenkel aufweist, die sich geradlinig erstrecken und in Bezug auf die Achse (X-X) des Griffs (2) so geneigt sind, dass sie den Raum (6) zum Aufnehmen der Stange (R) erweitern, wobei jeder der Schenkel mit dem Überbrückungsabschnitt (42) verbunden ist und eine Einkerbung (43) zum Aufnehmen des Drahtes (W) bei Drehung bildet.

6. Vorrichtung (1) nach Anspruch 4 bis 5, wobei die Schenkel der zweiten Gabel (41) sich im Allgemeinen parallel zu der Achse (X-X) und innenliegend zu den entsprechenden Schenkeln der Gabel (31) des ersten Abschnitts (3) erstrecken, und der Überbrückungsabschnitt (42) über eine Biegung (44) mit jedem Schenkel der zweiten Gabel (41) verbunden ist, wobei die Biegung die zweite Gabel auf eine Ebene innerhalb der Gabel (31) des ersten Abschnitts bewegt.

7. Vorrichtung (1) nach einem der Ansprüche 1 bis 6, wobei jeder Schenkel der zweiten Gabel (41) eine Kante (45) aufweist, die einen Raum (7) mit der ersten Gabel (31) zum Aufnehmen des Drahtes (W) bildet, wobei die Kante einen ersten Abschnitt (46), der in Bezug auf den Raum nach außen gebogen ist, einen zweiten Abschnitt (47), der in der Ebene des Schenkels liegt und weit von dem Überbrückungsabschnitt (42) weg geneigt ist, einen dritten Abschnitt (48), der wieder zur Außenseite des Raums hin geneigt ist, sowie einen vierten Abschnitt (49) umfasst, der auf den Drehbolzen (5) zu gebogen ist.

8. Vorrichtung (1) nach einem der Ansprüche 1 bis 7, wobei die zweite Gabel (41) des zweiten Abschnitts (4) ein Anschlagelement (8) als Bewegungsbegrenzung bei der Drehung an dem Draht (W) umfasst.

9. Verfahren zum Anbringen eines Arretierelementes (C) eines horizontalen Drahtes (W) an einer Stange (R) für Pflanzen, das die folgenden Schritte umfasst:
- Bereitstellen eines Arretierelementes (C), das einen Sattelabschnitt (C1), zwei abgerundete Enden (C2) des Sattelabschnitts, zwei Längsarme (C3), die sich parallel von den abgerundeten Ecken aus erstrecken, sowie zwei abgerundete Enten (C4) der Arme umfasst, die einander kreuzen;
- Aufbringen des Sattelabschnitts (C1) auf die Stange (R), wobei die Stange vertikal in den Boden gesteckt ist, bis die abgerundeten Enden (C2) des Sattelabschnitts mit dem Draht (W) in Eingriff kommen, der horizontal an der Stange (R) gespannt ist;
- Drücken der Arme (C3) und ihrer abgerundeten Enden (C4) des Elementes mittels der Vorrichtung (1) nach einem der Ansprüche 1 bis 8 so, dass sie über die Stange gleiten und sich von der Seite, an der der Draht in Kontakt mit dieser Stange ist, zu der entgegengesetzten Seite bewegen.

10. Verfahren zum Errichten eines Gitters zum Stützen von Pflanzenreihen, das die folgenden Schritte umfasst:
- vertikales Einstecken einer Vielzahl von Stangen (R) einer Pflanzenreihe in den Boden;
- Spannen wenigstens eines Drahtes (W) horizontal an der Vielzahl von Stangen entlang;
- umkehrbares Arretieren des wenigstens einen Drahtes (W) an der Vielzahl von Stangen (R ) mittels eines Arretierelementes (C), das einen Sattelabschnitt (C1), zwei abgerundete Enden (C2) des Sattelabschnitts, zwei Längsarme (C3), die sich parallel von den abgerundeten Enden aus erstrecken, sowie zwei abgerundete Enten (C4) der Arme umfasst, die einander kreuzen, wobei das Arretierelement mit einer Vorrichtung (1) nach einem der Ansprüche 1 bis 8 angebracht wird.

## Revendications

1. - Outil (1) de fixation d'un élément (C) apte à bloquer de manière réversible un fil horizontal (W) sur un tuteur (R) pour plantes, ledit tuteur étant planté verticalement dans le sol, comprenant une poignée de commande (2) s'étendant le long d'un axe rectiligne (X-X), une première partie (3) étant d'une seule pièce avec ladite poignée et une seconde partie (4) articulée sur ladite première partie au moyen d'une goupille rotative (5), ladite première partie (3) et ladite seconde partie (4) délimitant un espace (6) pour recevoir ledit tuteur (R) et ledit élément de blocage (C), ladite première partie (3) comprenant une fourche (31) pour pousser des bras (C3) dudit élément de blocage (C) et ladite seconde partie (4) comprenant une première fourche (40) pour centrer le tuteur (R) et pour l'engagement en rotation avec ledit fil (W), ladite première fourche étant fixée en rotation extérieurement à ladite première partie (3), **caractérisé par** une seconde fourche (41) pour faire s'écarter partiellement lesdits bras (C3), laquelle seconde fourche est fixée en rotation intérieurement à ladite fourche (31) pour pousser ladite première partie (3).

2. - Outil (1) selon la revendication 1, dans lequel ladite fourche (31) pour pousser l'élément de blocage (C) est d'une seule pièce avec une première extrémité (20) de la poignée (2) et s'étend de façon éloignée dudit axe (X-X) avec une première partie (32) inclinée par rapport à l'axe (X-X) et opposée à la première extrémité (20), et une seconde partie (33) qui à la place est sensiblement parallèle audit axe et opposée à la poignée.

3. - Outil (1) selon la revendication 2, dans lequel ladite seconde partie (33) présente une extrémité libre (34) comportant une saillie (35) coudée à l'opposé par rapport à l'espace (6) pour former un bord (36) pour pousser l'élément de blocage (C).

4. - Outil (1) selon l'une quelconque des revendications 1 à 3, dans lequel chaque branche de ladite seconde fourche (41) de la seconde partie (4) est d'une seule pièce avec une branche correspondante de la seconde fourche (40) au moyen d'une partie pontée (42), ladite partie pontée étant fixée en rotation à une fourche (30) de centrage sur le tuteur (R) de la première partie (3) par l'intermédiaire de ladite goupille (5) de telle sorte que la première fourche (40) est positionnée extérieurement à la fourche de centrage (30) de la première partie (3) et la seconde fourche (41) est positionnée à l'intérieur de la fourche de poussée (31) de ladite première partie.

5. - Outil (1) selon la revendication 4, dans lequel la première fourche (40) présente des branches respectives s'étendant de manière rectiligne et inclinée par rapport audit axe (X-X) de la poignée (2) pour étendre l'espace (6) de réception du tuteur (R), chacune desdites branches se raccordant à la partie pontée (42) définissant une encoche (43) pour recevoir en rotation le fil (W).

6. - Outil (1) selon l'une des revendications 4 et 5, dans lequel les branches de la seconde fourche (41) s'étendent généralement parallèlement par rapport audit axe (X-X) et intérieurement par rapport aux branches correspondantes de la fourche (31) de la première partie (3), et la partie pontée (42) est reliée à chaque branche de la seconde fourche (41) par un coude (44), lequel coude déplace la seconde fourche sur un plan intérieur par rapport à ladite fourche (31) de la première partie.

7. - Outil (1) selon l'une quelconque des revendications 1 à 6, dans lequel chaque branche de la seconde fourche (41) présente un bord (45) délimitant avec la première fourche (31) un espace (7) pour recevoir le fil (W), ledit bord comprenant une première partie (46) recourbée vers l'extérieur par rapport à l'espace, une deuxième partie (47) s'étendant selon le plan de ladite branche et étant inclinée de façon éloignée de la partie pontée (42), une troisième partie (48) recourbée à nouveau vers l'extérieur de l'espace, et une quatrième partie (49) recourbée vers la goupille rotative (5).

8. - Outil (1) selon l'une quelconque des revendications 1 à 7, dans lequel ladite seconde fourche (41) de la seconde partie (4) comprend un élément d'arrêt (8) en tant que limiteur de mouvement de la rotation sur le fil (W).

9. - Procédé de montage d'un élément de blocage (C) d'un fil horizontal (W) sur un tuteur (R) pour plantes, comprenant les étapes consistant à :
- fournir un élément de blocage (C) comprenant une partie selle (C1), deux extrémités arrondies (C2) de ladite partie selle, deux bras longitudinaux (C3) s'étendant parallèlement à partir desdites extrémités arrondies et deux extrémités arrondies (C4) desdits bras se croisant ;
- placer ladite partie selle (C1) sur le tuteur (R), lequel tuteur est planté verticalement dans le sol, jusqu'à ce que les extrémités arrondies (C2) de ladite partie selle engagent le fil (W) tendu horizontalement contre le tuteur (R) ;
- pousser les bras (C3) et leurs extrémités arrondies (C4) dudit élément pour passer sur le tuteur pour se déplacer du côté où le fil est en contact avec le même tuteur à celui opposé au moyen de l'outil (1) selon l'une quelconque des revendications 1 à 8.

10. - Procédé de construction d'une grille de soutien de rangées de plantes, comprenant les étapes consistant à :
- planter verticalement dans le sol une pluralité de tuteurs (R) d'une rangée de plantes ;
- tendre au moins un fil (W) horizontalement le long de ladite pluralité de tuteurs ;
- bloquer de manière réversible ledit au moins un fil (W) sur ladite pluralité de tuteurs (R) au moyen d'un élément de blocage (C) comprenant une partie selle (C1), deux extrémités arrondies (C2) de ladite partie selle, deux bras longitudinaux (C3) s'étendant parallèlement à partir desdites extrémités arrondies et deux extrémités arrondies (C4) desdits bras se croisant, l'élément de blocage étant monté avec un outil (1) selon l'une quelconque des revendications 1 à 8.
